# EUROPEAN PATENT SPECIFICATION

(11) **EP 2 314 957 B1**
(45) Date of publication and mention of the grant of the patent: **29.06.2016**
(21) Application number: 10775120.8
(22) Date of filing: 14.05.2010
(51) Int. Cl.: F25B 41/00, F28D 1/053, F28D 21/00, B60H 1/32, F25B 5/02

(54) **MULTI-EVAPORATION SYSTEM**
MEHRFACHVERDAMPFUNGSSYSTEM
SYSTÈME À ÉVAPORATIONS MULTIPLES

(30) Priority: 14.05.2009 KR 20090042057; 04.12.2009 KR 20090119621; 04.12.2009 KR 20090119628; 04.12.2009 KR 20090119633
(43) Date of publication of application: 27.04.2011
(73) Proprietor: Hanon Systems, Daejeon 34325 (KR)
(72) Inventor: AHN, Yong Nam, Daejeon 306-230 (KR); PARK, Tae Young, Daejeon 306-230 (KR); MIN, Eun Gi, Daejeon 306-230 (KR); KIM, Deok Soo, Daejeon 306-230 (KR)
(74) Representative: Laufhütte, Dieter
(86) International application number: PCT/KR2010/003044
(87) International publication number: WO 2010/131918

(56) References cited:
- EP-A1- 1 975 525
- JP-A- 2005 231 406
- JP-A- 2009 085 569
- KR-A- 20040 000 961
- KR-A- 20070 082 274
- KR-B1- 100 531 365

## Description

### [Technical Field]

The present invention relates to a multi-evaporation system, and more particularly, to a multi-evaporation system which carries out a multi-evaporation process in an air-conditioning cycle of a vehicle air conditioning system, thereby enhancing system efficiency.

### [Background Art]

In the automobile industry, as general concerns about energy and environment are increased globally, the efficiency in each part including fuel efficiency has been steadily improved, and the external appearance of a vehicle has been also diversified in order to satisfy various demands of customers. According to such a tendency, research and development on lighter weight, smaller size and multi-function of each vehicle component has been carried out. Particularly, in an air-conditioning unit for a vehicle, since it is generally difficult to secure an enough space in an engine room, there have been many efforts to manufacture an air-conditioning system having a small size and high efficiency.

Meanwhile, the air-conditioning system generally includes an evaporator for absorbing heat from a peripheral portion, a compressor for compressing refrigerant, a condenser for radiating heat to a peripheral portion, and an expansion valve for expanding the refrigerant. In the air-conditioning system, the gaseous refrigerant introduced from the evaporator to the compressor is compressed at a high pressure and high temperature, and the compressed gaseous refrigerant radiates liquefaction heat to a peripheral portion while passing through the condenser so as to be liquefied, and the liquefied refrigerant is passed through the expansion valve so as to be in a low pressure low temperature wet vapor state and then introduced again into the evaporator so as to be vaporized.

Herein, the substantial air conditioning action occurs in the evaporator that absorbs vaporization heat from a peripheral portion while the wet vapor refrigerant is vaporized. As described above, the condenser and evaporator in the air-conditioning system typically fall into the category of the heat exchanger. Therefore, the improving of evaporator efficiency is a very important factor in the air-conditioning system. EP 1 975 525 discloses a multi-evaporation system according to the preamble of claims

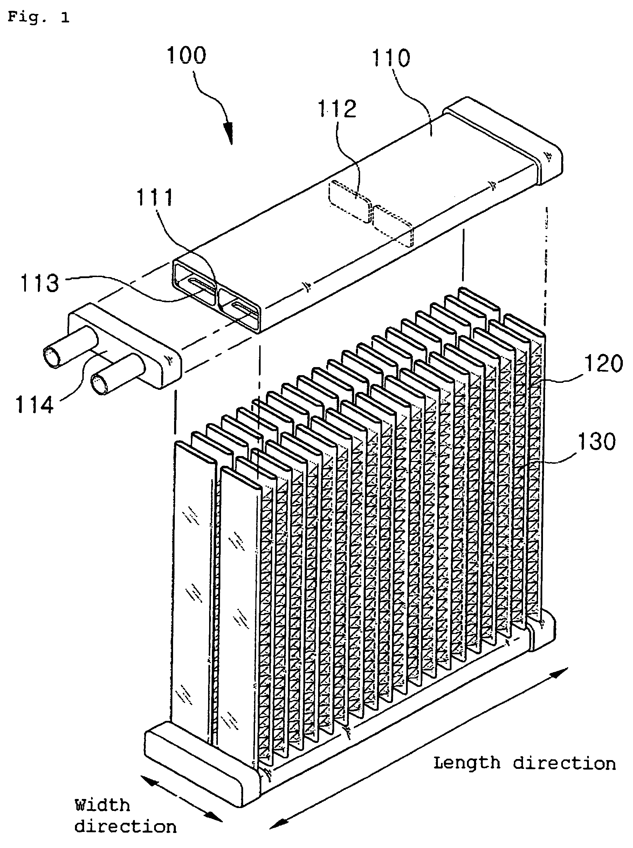

Fig. 1 is a perspective view of a general evaporator. As shown in the drawing, the evaporator 100 includes a pair of header-tanks 110, a plurality of tubes 120 and a plurality of fins 130. The header-tank 110 includes a plurality of tube insertion holes 113 that are formed at a lower surface or an upper surface thereof to be extended in a width direction thereof and arranged in a longitudinal direction thereof, an end cap 114 that closes both longitudinal ends thereof, at least one partition wall 111 that partitions an inner space as a refrigerant passage in the longitudinal direction, and at least one baffle 112 that partitions the refrigerant passage in the width direction. Further, both ends of the tube 120 are fixedly inserted into the tube insertion hole 113 of the header-tank 10 so as to form a refrigerant passage, and the fin 130 is interposed between the tubes 120 to enhance heat exchange performance. Herein, the type of evaporator shown in Fig. 1 is just an example. The tube 120 may be arranged in two rows (as shown in Fig. 1), a single row, or three rows. Further, positions and shapes of the partition wall 111 and the baffle 112 may be changed according to a design of the refrigerant passage, and a communicating hole may be formed in the partition wall 111. Therefore, the evaporator is not restricted to that of Fig. 1.

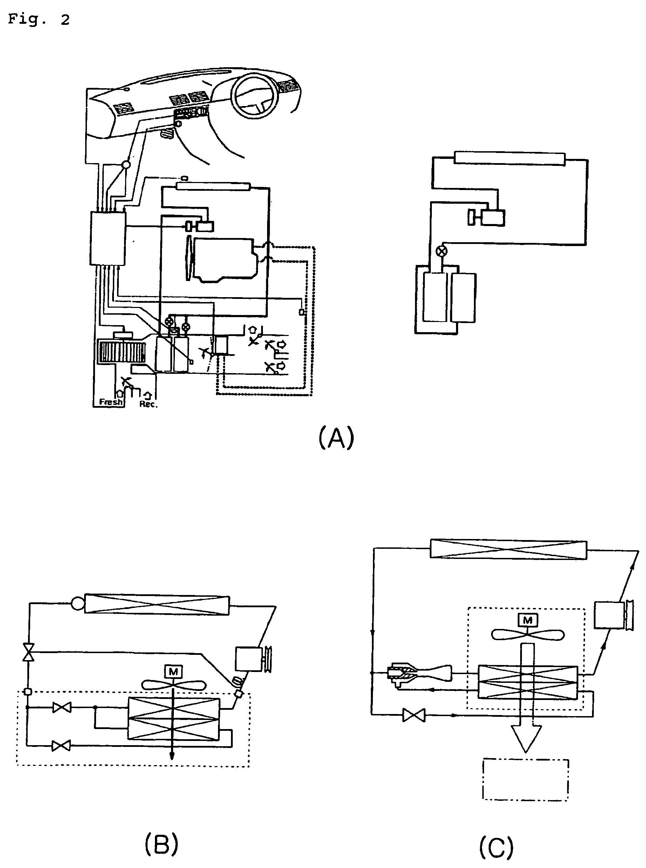

There have been many efforts to increase the evaporator efficiency by variously changing the basic construction of the evaporator shown in Fig. 1. Fig. 2 shows evaporation systems constructed by various techniques for improving the efficiency of the conventional evaporator.

Fig. 2A shows an evaporation system described in Japanese Patent Publication No. 2000-062452 (hereinafter, prior art 1). In the prior art 1, two evaporators are arranged in parallel so that refrigerant passed through an expanding means is branched off and then passed through each of the evaporators. In an embodiment shown at the right side of Fig. 2A, one of the evaporators accommodates a cold storage material and functions as a cold storage unit so as to increase cooling efficiency of air passing through the evaporator. Fig. 2B shows an evaporator employing a technique described in Japanese Patent Publication No. 2009-085569 (hereinafter, prior art 2). In the prior art 2, two evaporators are arranged in parallel so that refrigerant passed through an expanding means is passed through, in turn, each evaporator. And Fig. 2C shows an evaporator employing another technique described in Japanese Patent Publication No. 2005-308384 (hereinafter, prior art 3). In the prior art 3, two evaporators are arranged in parallel so that refrigerant passed through an expanding means is passed through, in turn, an evaporator, an ejector, and an evaporator.

However, the evaporation systems described in the prior arts have some problems as followings. In case of the prior art 1, one of the two evaporators substantially functions as the cold storage unit, and if the cold storage unit is sufficiently cold-stored, the air is efficiently cooled. But in an initial stage that the cold storage unit is not cold-stored absolutely, the refrigerant passed through the expanding means absorbs from both of the air and the cold storage material, and thus the cooling efficiency of the air is deteriorated. Further, when the driving is intermittently performed at the side of the cold storage unit and low temperature refrigerant is stored, it is difficult to control the flow thereof. Furthermore, since the prior art 1 functions just as the cold storage unit, the air-conditioning operation is maintained only for a desired time period when an engine is stopped, and thus it is impossible to entirely enhance the cooling performance.

In case of the prior art 2, since the refrigerant is passed through, in turn, the two evaporators which are arranged in series, there is an advantage in that it is possible to maximize a length of the refrigerant passage. However, since the length of the refrigerant passage becomes too long, the pressure drop due to the passing of the evaporators is sharply increased, thereby considerably reducing the system efficiency. Further, in the structure of the prior art 2, since the refrigerant of the first evaporator is introduced into the second evaporator, evaporation pressure is excessively increased, thereby reducing the system efficiency.

In addition, in case of the prior art 3, the refrigerant is passed through, in turn, the evaporator, the ejector and the evaporator, and it is promoted that the ejector is used to mix the refrigerants having different temperature, thereby improving a temperature condition of the refrigerant and thus increasing the air-conditioning efficiency. However, the prior art 3 has some problems as follows. In the construction of the prior art 3, since the refrigerant is passed through, in turn, the two evaporators which are arranged in series, there is an advantage in that it is possible to maximize a length of the refrigerant passage in which heat exchange is occurred. However, since the length of the refrigerant passage becomes too long, the pressure drop due to the passing of the evaporators is sharply increased, thereby considerably reducing the system efficiency. Further, in the structure of the prior art 3, since the refrigerant of the first evaporator is introduced into the second evaporator, evaporation pressure is excessively increased, thereby reducing the system efficiency.

Therefore, the study on a new evaporation system for simultaneously enhancing the air-conditioning efficiency and the system efficiency in the evaporator regardless of a time and condition of the driving is required.

### [Disclosure]

### [Technical Problem]

An object of the present invention is to provide a multi-evaporation system in which multi-evaporation is occurred by a plurality of evaporators arranged in parallel, thereby enhancing the air-conditioning and system efficiency.

Another object of the present invention is to provide a multi-evaporation system which is further provided with an ejector so as to mix the refrigerants and thus improve the temperature condition, thereby enhancing the air-conditioning and system efficiency.

### [Technical Solution]

To achieve the object of the present invention, the present invention provides a multi-evaporation system including a compressor 10 which sucks and compresses refrigerant; a condenser 20 which condenses the refrigerant compressed in the compressor 10; an expanding means 30 which receives the refrigerant condensed in the condenser 20 through an inlet port 31, branches the refrigerant into at lest two or more, discharges the refrigerant through at least two or more discharging part 32a to 32n, and throttles the refrigerant before or after the refrigerant is branched; and an evaporator 40 which comprises at least two or more evaporating parts 41 to 4N so as to receive and evaporate the refrigerant discharged from the expanding means 30 and then introduce the evaporated refrigerant into the compressor 10, wherein the evaporating parts 41 to 4N are parallelly disposed in a flow direction of air passing through the evaporating parts 41 to 4N so that the air blown by a single blower 60 is passed through in turn the evaporating parts 41 to 4N so as to be cooled, and the discharging parts 32a to 32n and the evaporating parts 41 to 4N are connected by refrigerant passages disposed in parallel.

According to the present invention, the refrigerant which is branched and discharged from the discharging parts 32a to 32n of the expanding means 30 is supplied to the evaporating parts 41 to 4N at the same time. Further, a distribution rate of the refrigerant supplied to the evaporating parts 41 to 4N becomes higher as the evaporating parts 41 to 4N are disposed at a more upstream side of the flow direction of the air blown from the blower 60.

Preferably, the evaporating parts 41 to 4N are formed by dividing the evaporator 40 into at least two or more evaporating regions, or the evaporating parts 41 to 4N are formed by dividing the evaporator 40 into two evaporating regions, or the evaporating parts 41 to 4N are formed separately so as to be closely contacted with each other and arranged in parallel.

Preferably, the expanding means 30 comprises an inlet passage 33 which passes the refrigerant introduced from the inlet port 31; and at least two or more outlet passages 34a to 34n which are formed by dividing the inlet passage 33 into at least two or more so as to discharge the refrigerant to the discharging part 32a to 32n. At this time, the expanding means 30 comprises an expanding part before branching 35 which is provided at the inlet passage 33 so as to throttle the refrigerant, and an expanding part 35a to 35n which is provided at the outlet passage 34a to 34n so as to throttle the refrigerant. And the expanding part before branching 35 and the expanding part 35a to 35n are respectively comprised of one selected from an expansion valve, an orifice, a capillary tube, and a reducing means.

Preferably, the expanding means 30 comprises the expanding part before branching 35, and the expanding parts provided at the outlet passages except the first outlet passage 34a which supplies the refrigerant to the first evaporating part 41 disposed at an uppermost stream side of the flow direction of the air blown by the blower 60. And the expanding part before branching 35 is comprised of an expansion valve, and the expanding parts provided at the outlet passages except the first outlet passage 34a is comprised of one selected from reducing means comprising an orifice and a capillary tube.

Preferably, the expanding means 30 is formed so that a pressure reduction value of the refrigerant supplied to the evaporating part disposed at the downstream of the flow direction of the air blown by the blower 60 is larger than that of the refrigerant supplied to the evaporating part disposed at the upstream of the air flow direction.

Preferably, the expanding means 30 is formed so that a pressure reduction value of the refrigerant supplied to the evaporating part having a relatively small flow rate becomes larger.

Preferably, the expanding means 30 is comprised of expanding parts 35a to 35n which are provided at the outlet passages 34a to 34n so as to throttle the refrigerant, and the expanding parts 35a to 35n are formed so that a pressure reduction level is controlled by adjusting an opening degree thereof. At this time, the expanding means 30 is formed so that a pressure reduction value of the refrigerant supplied to the evaporating part disposed at the downstream of the flow direction of the air blown by the blower 60 is larger than that of the refrigerant supplied to the evaporating part disposed at the upstream of the air flow direction.

Preferably, the multi-evaporation system further includes an ejector 50 which is provided between the evaporator 40 and the compressor 10 so as to suck the refrigerant discharged from a part or whole of the remaining evaporating parts using a flow speed of the refrigerant discharged from a part of the first to Nth evaporating parts 41 to 4N, raise pressure of the refrigerant and then supply the refrigerant to the compressor 10.

Preferably, the ejector 50 includes a nozzle part 51 which decompresses and expands the refrigerant discharged from a part of the first to Nth evaporating parts 41 to 4N, and increases a flow speed of the refrigerant; a suction part 52 which sucks the refrigerant discharged from part or whole of the remaining evaporating parts using an increased flow speed of the refrigerant injected from the nozzle part 51; and a diffuser part 53 which mixes the refrigerant injected from the nozzle part 51 and the refrigerant sucked through the suction part 52 and then raise pressure of the mixed refrigerant.

Preferably, the ejector 50 is formed so that the refrigerant has a subsonic speed.

Preferably, the multi-evaporation system further includes a detecting means 70 which is provided at passages for connecting the expanding means 30, the evaporator 40 and the compressor 10 so as to detect temperature and pressure of the refrigerant and control an operation of the expanding means 30.

### [Advantageous Effects]

According to the present invention, the refrigerant that is branched in plural while passing through an expanding means is multi-evaporated by the plurality of evaporators arranged in parallel, thereby efficiently evaporating the refrigerant. In other words, temperature of the overheated air is lowered while the air passes through each evaporator, and thus the expanding means that is disposed at the front end of each evaporator expands the pressure and temperature of the refrigerant responding to the temperature of the air introduced into each evaporator (high temperature range: an increase in the refrigerant pressure and temperature by a small margin, low temperature range: decrease in the refrigerant pressure and temperature), and thus the control of the evaporation range is precisely carried out, thereby efficiently achieving the evaporation. Further, in the process that the refrigerant is branched off and then passed through the evaporator, the length of the refrigerant passage is remarkably reduced comparing with that in the prior art, thereby improving the pressure drop of the refrigerant when the refrigerant is passed through the evaporator.

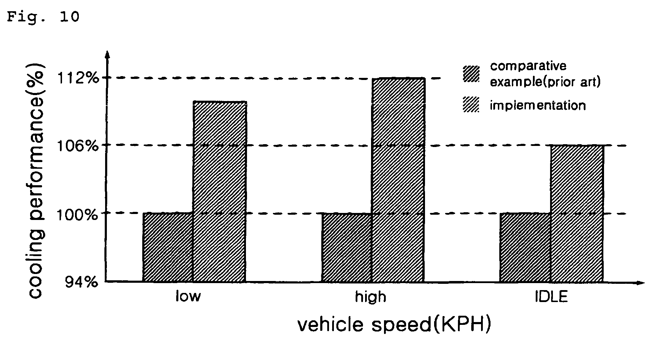

Further, according to the present invention, it is possible to considerably enhance the efficiency of the entire system. Fig. 10 shows experiment values of comparing a system using a conventional evaporator and a dual evaporation system having a double evaporating range according to the present invention. As an experimental result with the respect to the same component specifications at an ambient temperature of 35°C, it can be experimentally confirmed that the system performance is remarkably increased in all cases, for example, 9.9% at a low speed, 12% at a high speed and 6% at an idle state.

Furthermore, since the refrigerants that is branched in plural and then evaporated in each evaporator are mixed using the ejector, the conditions like the temperature and pressure of the refrigerant which is discharged from the evaporator and then introduced into a compressor is optimized to thereby further improve the system efficiency. Particularly, since the ejector used in the present invention is constructed so that the refrigerant is flowed at a subsonic speed, the refrigerant is efficiently mixed and also noise is not generated.

### [Description of Drawings]

The above and other objects, features and advantages of the present invention will become apparent from the following description of preferred embodiments given in conjunction with the accompanying drawings, in which:
Fig. 1 is a view showing a construction of a general evaporator.
Fig. 2 is a view of a conventional evaporation system.
Fig. 3 is a view of a multi-evaporation system in accordance with the present invention.
Fig. 4 is a view showing an expanding means of the multi-evaporation system in accordance with the present invention.
Fig. 5 is a view of the multi-evaporation system having an ejector in accordance with the present invention.
Fig. 6 is a view of the ejector in accordance with an embodiment of the present invention.
Fig. 7 is a view of the expanding means in accordance with an embodiment of the present invention.
Fig. 8 is a view showing a p-h line in a refrigerating cycle device.
Fig. 9 is a view showing a pressure drop rate in the refrigerating cycle device.
Fig. 10 is a view showing an cooling performance in each of the conventional evaporator and the evaporator of the present invention.

### [Detailed Description of Main Elements]

10: compressor 11: condenser
20: expanding means 31: inlet port
32a∼32n: first to Nth discharging part
33: inlet passage
34a∼34n: first to Nth outlet passage
35: expanding part before branching
35a∼35n: first to Nth expanding parts
40: evaporator
41-4N: first to Nth evaporating part
60: blower 70: detecting means

### [Best Mode]

Hereinafter, the embodiments of the present invention will be described in detail with reference to accompanying drawings.

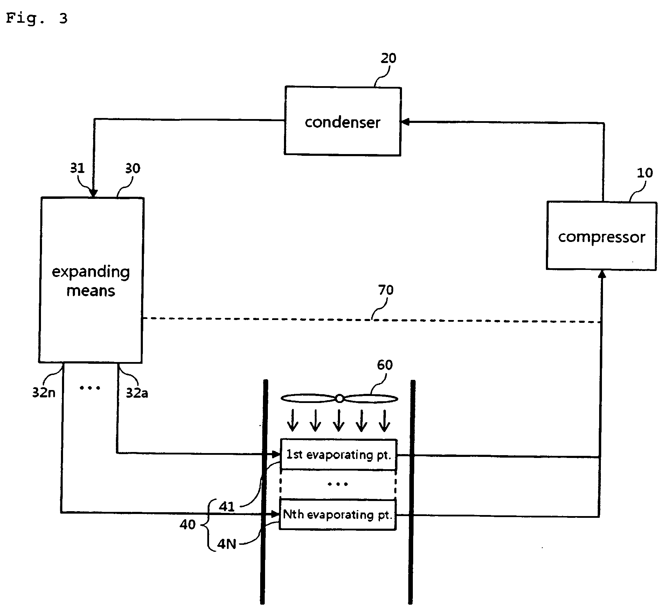

Fig. 3 is a view of a multi-evaporation system in accordance with the present invention. Like a general air-conditioning system, the multi-evaporation system of the present invention includes a compressor 10 which sucks and compresses refrigerant; a condenser 20 which condenses the refrigerant compressed in the compressor 10; an expanding means 30 which throttles the refrigerant condensed in the condenser 20; and an evaporator 40 which evaporates the refrigerant throttled in the expanding means 30. As shown in Fig. 3, the refrigerant discharged from the evaporator 40 is flowed again into the compressor 10 such that the refrigerant is circulated. The multi-evaporation system of the present invention has a passage for connecting the expanding means 30, the evaporator 40 and the compressor 10, and also further includes a detecting means 70 which detects temperature and pressure of the refrigerant so as to control the expanding means 30.

In the constructions of the expanding means 30 and the evaporator 40, the multi-evaporation system of the present invention has different features from the general air-conditioning system.

The expanding means 30 receives the refrigerant condensed in the condenser 20 through an inlet part 31, and throttles and then discharges it. Herein, as shown in Fig. 3, the expanding means 30 has refrigerant passages branched into N, and the refrigerant is discharged through first to Nth discharging parts 32a to 32n. The refrigerant before or after being branched is throttled in the expanding means 30 (wherein N is an integer eqaul to or larger than 2). As described above, the refrigerant discharged from the expanding means 30 is branched into N, and flowed into the evaporator 40 through the independent N refrigerant passages.

The evaporator 40 functions to receive and evaporate the refrigerant discharged from the expanding means 30 and then introduce it into the compressor 10. As shown in the drawing, the evaporator 40 includes a first evaporating part 41 for receiving and evaporating the refrigerant discharged from the first discharging part 32a to an Nth evaporating part 4N for receiving and evaporating the refrigerant discharged from the Nth discharging part 32n. Further, the first to Nth evaporating parts 41 to 4N are arranged in parallel so as to be overlapped in an air flow direction, and thus the air sent by a single blower is passed through in turn the first evaporating part 41 to the Nth evaporating part 4N so as to be cooled. Of cause, since the first evaporating part 41 to the Nth evaporating part 4N are disposed in parallel, the refrigerant passage connecting the first discharging part 32a and the first evaporating 41 and the refrigerant passage connecting the Nth discharging part 32n and the Nth evaporating part 4N are also disposed in parallel.

According to the present invention, the evaporating parts 41 to 4N receive simultaneously the refrigerant branched and discharged from the discharging parts 32a to 32n. In other words, it means that the refrigerant branched in the expanding means 30 is not supplied in turn to each evaporating part, but supplied at the same time to the evaporating parts 41 to 4N. In the present invention, the refrigerant is supplied to all of the N evaporating parts 41 to 4N so as to exchange heat with the air blown by the blower 60.

As described above, the N evaporating parts 41 to 4N are disposed in parallel, and the air blown by the single blower 60 is passed through in turn the evaporating parts 41 to 4N. Thus, the air that is primarily cooled in the first evaporating part 41 is flowed into the second evaporating part 42, and the air that is secondly cooled in the second evaporating part 42 is flowed into the third evaporating part 43,.... This process is repeated N times, and thus the air is repeatedly cooled Nthly.

Herein, the repeated cooling process shows a different aspect from that in the evaporator arranged in two or more rows. In case of the evaporator arranged in two or more rows, as shown in Fig. 1, the refrigerant is passed through in turn the first and second rows. The refrigerant absorbs heat from the air while passing through the first row, and thus the refrigerant passing through the second row has higher temperature than the refrigerant passing through the first row. Therefore, air cooling performance at the first row is lower than that at the second row. However, in the present invention, the refrigerant flowed into the evaporating parts 41 to 4N is previously branched into N from the expanding means 30, and thus all the refrigerant flowed into each evaporating part 41 to 4N has the same temperature condition. That is, in case of a conventional evaporator arranged into multiple rows, the temperature of the refrigerant is increased, (because the refrigerant exchanges heat with the air so as to absorb the heat) whenever passing through each row. Thus, as the row number is increased, the air cooling performance is deteriorated (i.e., in the second row than the first row, in the third row than the second row,...). However, according to the present invention, since the temperature conditions of the refrigerant passing through the evaporating parts 41 to 4N are the same as each other, the problem that the air cooling performance is deteriorated as the row number is increased is basically solved. Therefore, the evaporator 40 of the present invention has excellent air cooling performance comparing with the conventional evaporator.

Moreover, since the evaporator 40 is comprised of the evaporating parts 41 to 4N arranged in parallel, it is possible to further obtain the effects as follows. In case of the conventional evaporator shown in Fig. 1 or the evaporator shown in Fig. 2B (the two evaporators are disposed in series), the refrigerant passage is long. As the refrigerant passage becomes long, the heat exchanging performance and the pressure drop rate are increased. However, if the pressure drop rate is excessively increased, it has a harmful effect on the heat exchanging performance. Therefore, in a study on the form enhancement for improving the cooling performance of the evaporator, it is important to increase the heat exchanging performance and also reduce the pressure drop rate.

In the present invention, the evaporating parts 41 to 4N are disposed in parallel, and the refrigerant flowed into the evaporating parts 41 to 4N is previously branched in the expanding means 30 into N corresponding to the number of evaporating parts. Thus the refrigerant passage has the same length as that in a single evaporator. However, in case of the general evaporator shown in Fig. 1, since the refrigerant has to pass through all of the two rows, the refrigerant passage has a length corresponding to twice of the length of the general evaporator. In case of the evaporator shown in Fig. 2B, a length of refrigerant passage becomes longer. That is, the evaporator 40 of the present invention minimizes the length of the refrigerant passage so as to remarkably reduce the pressure drop rate of the refrigerant, thereby maximizing the cooling performance in the evaporator 40.

Preferably, as the evaporating parts 41 to 4N are disposed at a more upstream side of a flow direction of the air blown by the blower 60, a distribution rate of the refrigerant is increased. In other words, the distribution rate of the refrigerant is set so that an amount of the refrigerant supplied to the first evaporating part 41 disposed at an uppermost stream side (which is the most adjacent to the blower 60) is larger than that supplied to the second evaporating part 42, and an amount of the refrigerant supplied to the second evaporating part 42 is larger than that supplied to the third evaporating part 43. In the present invention as described above, the refrigerant is simultaneously supplied to each evaporating part 41 to 4N, and the temperature conditions of the refrigerants supplied to each evaporating part is the same as each other. However, as the air blown by the blower 60 is passed through the evaporating parts 41 to 4N, a speed of the air becomes slow due to air resistance, and also its temperature is increased due to heat exchange with the refrigerant. That is, the speed of the air passing through the first evaporating part 41 is larger that that of the air passing through the second evaporating part 42..., and the temperature of the air passing through the first evaporating part 41 is smaller that that of the air passing through the second evaporating part 42.... Accordingly, the heat exchange performance in the first evaporating part 41 disposed at the uppermost stream side is the highest, and the heat exchange performance in other evaporating parts becomes lower gradually. Thus, the distribution rate of the refrigerant is set so that a largest amount of refrigerant is supplied to the first evaporating part 41, and a next largest amount of refrigerant is supplied to the second evaporating part 42,..., thereby maximizing the heat exchange performance. In other words, as the evaporating parts are disposed at a more downstream side of the air flow direction, the distribution rate is reduced.

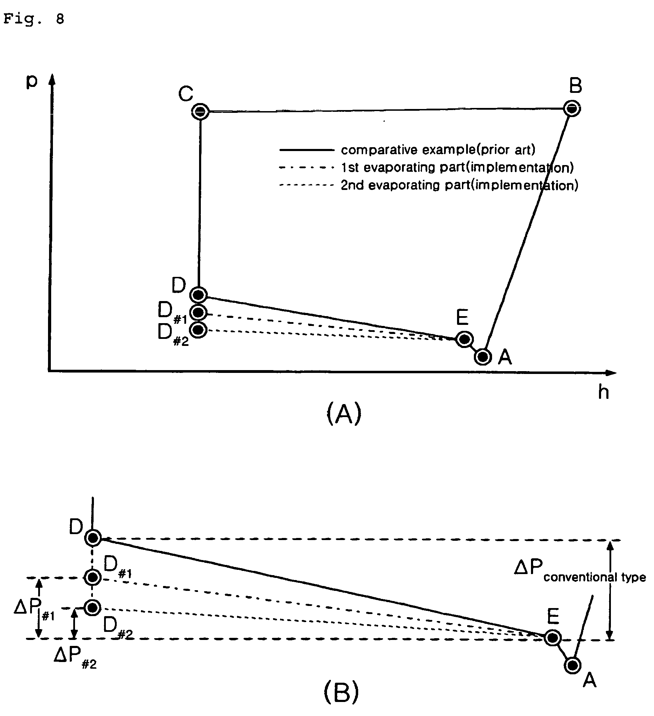

Hereinafter, it will be described regarding to a case that there are two evaporating parts, i.e., the evaporator includes the first and second evaporating parts. Fig. 8 is a view showing a p-h line in a conventional vehicle air conditioner system having a single evaporator and a vehicle air conditioner system having two evaporating regions according to the present invention. In Fig. 8, a region #1 is an evaporation region which is disposed at an upstream side of the air flow generated by the blower 60, and a region #2 is an evaporation region which is disposed at a downstream side thereof.

Herein, in case of the present invention, the refrigerant is properly distributed and supplied according to inlet air temperature (thermal load) for each region. Since the inlet air temperature of the region #1 is higher than that of the region #2, a refrigerant flow rate of the region #1 is larger that that of the region #2.

If a total refrigerant flow rate of the regions #1 and #2 is the same as that in the conventional evaporator, a refrigerant flow rate passing through each evaporating part is smaller than a total refrigerant flow rate passing through the conventional evaporator, because the refrigerant is simultaneously supplied to the multiple evaporating parts that are parallelly arranged in the air flow direction. Thus a refrigerant pressure loss generated while the refrigerant passes through an inner portion of the evaporator is reduced. In other words, since the refrigerant is simultaneously supplied to each evaporating part, the refrigerant pressure loss is reduced when passing through each evaporating part. Owing to the low pressure loss in the evaporator, an inlet pressure of the evaporator is reduced, such that the refrigerant is smoothly expanded and evaporated. Particularly, in case of the region #2, since the flow rate is small, and thus the pressure loss is reduced, pressure of the evaporator is remarkably decreased (also the refrigerant temperature is also decreased), and the refrigerant is smoothly evaporated.

Therefore, if the refrigerant is branched and supplied, the inlet refrigerant pressure (temperature) is considerably decreased even in the same sized evaporator, thereby efficiently evaporating the refrigerant. Herein, the enthalpy difference is the same, but the total refrigerant flow rate is increased, thereby enhancing a heat radiation performance and thus improving the air conditioner performance.

According to the evaporator 40 of the present invention, since the single evaporator 40 is divided into N evaporating regions, it is very to realize it. For example, in the evaporator shown in Fig. 1, each row is divided by a partition wall, and each row has an inlet port and an outlet port. If the evaporator 40 of the present invention is embodied as described above, the evaporating parts 41 to 4N are disposed to be closely contacted with each other, and the air passing through one evaporating part is flowed to the next evaporating part, thereby maximally preventing heat loss and thus maximizing the air cooling performance. In addition, since the evaporator 40 embodied as described above has a shape similar to the conventional evaporator, it is possible to use a conventional evaporator manufacturing system without additional initial investment expense. As a preferable embodiment, in case of employing the construction of a general two row heat exchanger, the two rows are completely isolated from each other by using a structure such as baffle and a partition wall so that the refrigerant is not exchanged between the two rows, and inlet and outlet ports are respectively formed at each row, thereby embodying a multi-evaporator of the present invention (in this case, the evaporation performs double evaporation).

As described above, the evaporator of the present invention may be constructed as follows: the single evaporator is divided by the partition wall so as to form the N evaporating regions, or the evaporating parts 41 to 4N are separately formed to be closed contacted with each other and arranged in parallel.

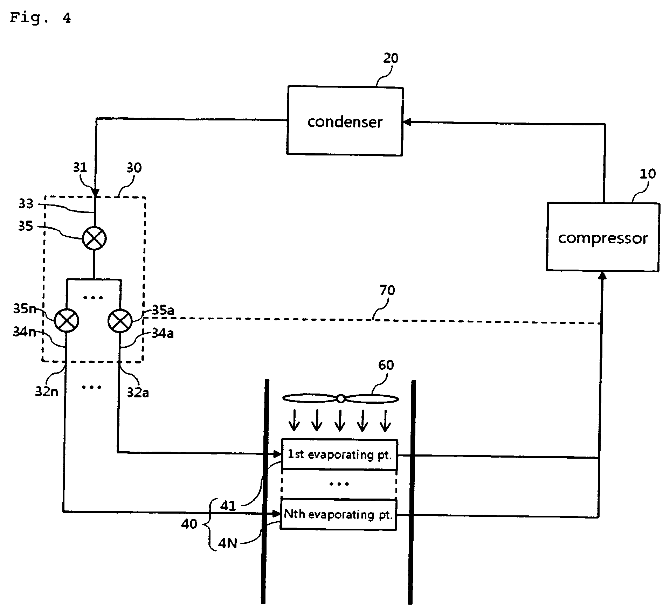

Fig. 4 is a view showing an expanding means of the multi-evaporation system in accordance with the present invention. As shown in Fig. 4, the expanding means 30 includes an inlet passage 33 which is connected with an inlet port 31, N outlet passages which are respectively connected with N outlet ports 32a to 32n, and expanding parts 35, 35a to 35n which are provided at each passage.

The inlet passage 33 passes the refrigerant introduced from the inlet port 31, and the first to Nth outlet passages 34a to 34n are formed by branching the inlet passage 33 into N. The first to Nth outlet passages 34a to 34n are connected with the first to Nth discharging part 32a to 32n so as to discharge the refrigerant.

Hereinafter, the expanding parts 35, 35a to 35n having the passages will be described in detail. Assuming that the expanding part which is disposed at the inlet passage 33 to throttle the refrigerant is called an expanding part before branching 35, and the expanding part which is disposed at the first outlet passage 34a to throttle the refrigerant is called a first expanding part 35a, ... and the expanding part which is disposed at the Nth outlet passage 34n to throttle the refrigerant is called an Nth expanding part 35n, the expanding means 30 of the present invention includes at least one of the expanding part before branching 35, and the first to Nth expanding parts 35a to 35n. For example, only the expanding part before branching 35 may be provided at the inlet passage 33, or only the Nth expanding part 35n may be provided at the Nth outlet part 34n, or the expanding part is not provided at the inlet passage 33 but all the first to Nth expanding parts 35a to 35N are respectively provided at the first to Nth outlet passages 34a to 34n, and the expanding means 30 may be formed into various types according to design purpose, desired performance and the like.

Preferably, the expanding part before branching 35 and the expanding parts 35a to 35n may be comprised of one of an expansion valve, an orifice, a capillary tube, and a reducing means.

Further, it is preferable that the expanding means 30 includes the expanding part before branching 35, and the expanding parts provided at the outlet passages except the first outlet passage 34a supplying the refrigerant to the first evaporating part 41 which is disposed at the uppermost stream side of the flow direction of the air blown by the blower 60.

According to the description of the evaporator 40, since the heat exchange performance is the highest in the first evaporating part 41 disposed at the uppermost stream side that is the most adjacent to the blower 60, the refrigerant distribution rate supplied to each evaporating part is set to be gradually reduced from the first evaporating part 41 toward the Nth evaporating part 4N, i.e., to be the largest in the first evaporating part 41 and the smallest in the Nth evaporating part 4N. In this case, according to the distribution rate supplied to each evaporating part 41 to 4N, an amount of the refrigerant passing through the first outlet passage 34a becomes maximum, and an amount of the refrigerant passing through the Nth outlet passage 34n becomes minimum. Meanwhile, the expanding part before branching 35 is provided so that the refrigerant is throttled while being passed through the expanding part before branching 35, and also since the expanding parts are provided at the outlet passages, the expanded refrigerant is throttled once more by the expanding parts while being passed through the expanding parts 34a to 34n, thereby increasing the evaporation efficiency.

Herein, it is possible to obtain an effect of the increase in the evaporation efficiency by the pressure reduction due to the throttling of the refrigerant, however, there is also possibility of deteriorating the efficiency due to the pressure drop. In case that the amount of the refrigerant distributed to the first evaporating part 41 becomes the largest, the amount of the refrigerant passing through the first outlet passage 34a also becomes maximum. At this time, since the flow rate of the refrigerant passing through the outlet passages 34b to 34n except the first outlet passage 34a is relatively small, bad influence due to the pressure drop is relatively small, and the effect of the increase in the evaporation efficiency due to the pressure reduction is larger than the bad influence. However, in the first outlet passage 34a, if a large amount of the refrigerant passing through the first outlet passage is throttled once more, the refrigerant flow rate is reduced, thereby reducing the efficiency.

Therefore, it is more preferable that the expanding part is provided at the rest of the passages (the inlet passage, the second outlet passage,..., Nth outlet passage) except the first outlet passage 34a. Because a relatively small flow rate is flowed in the rest of the passages, the bad influence due to the pressure drop is minimized when the expanding parts are additionally provided, and the effect of the increase in the efficiency is maximized by the pressure reduction due to the throttling of the refrigerant.

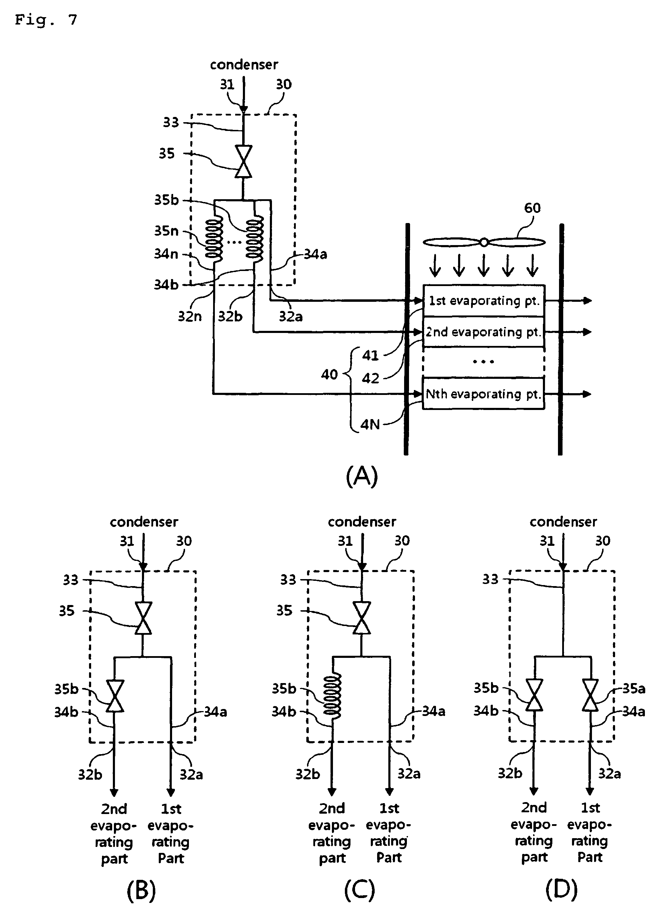

Fig. 7A shows an embodiment of the expanding means 30 which includes the expanding part before branching 35 and the expanding parts provided at the outlet passages except the first outlet passage 34a through which the refrigerant is supplied to the first evaporating part 41 disposed at the uppermost stream side of the flow direction of the air blown from the blower 60. In this case, the expanding part before branching 35 is an expansion valve, and the expanding parts provided at the passages except the first outlet passage 34a may be comprised of a reducing means such as an orifice, a capillary tube, and a pipe of which a diameter is reduced in a refrigerant flow direction. Further, in case of three or more evaporating parts, the expanding part may be provided at all of the outlet passages except the first outlet passage 34a, or provided at parts of the outlet passages except the first outlet passage 34a.

Figs. 7B and 7C show an embodiment in which the two evaporating parts are provided, wherein the expanding means 30 includes the expanding part before branching 35 and the second expanding part 35b (i.e., which is similar to the embodiment of Fig. 7A that the expanding part is not provided at the first outlet passage 34a, but provided at the inlet passage 33 and the rest of the outlet passages). Herein, Fig. 7B shows a case that all of the expanding part before branching 35 and the second expanding part 35b are the expansion valves, and Fig. 7C (that is similar to Fig. 7A) shows a case that the expanding part before branching 35 is the expansion valve, and the second expanding part 35b is the reducing means.

Fig. 7D shows an embodiment in which the two evaporating parts are provided, wherein the expanding part is not provided at the inlet passage 33 (i.e., the expanding part before branching 35 is not provided), and each expanding part is provided at each outlet passage. In Fig. 7D, there are provided two evaporating parts, and this may be applied to the multi-evaporation system. In the embodiment, the expanding means 30 includes the expanding parts 35a to 35n which are respectively disposed at the outlet passages 34a to 34n so as to throttle the refrigerant. The expanding part 35a to 35n is formed so that a pressure reduction level is controlled by adjusting an opening degree thereof. More preferably, the expanding means 30 is formed so that a pressure reduction value of the refrigerant supplied to the evaporating part disposed at the downstream of the flow direction of the air blown by the blower 60 is larger than that of the refrigerant supplied to the evaporating part disposed at the upstream of the flow direction.

The construction of the expanding means 30 is not limited to the descriptions as described above and the present invention of Fig. 7.

The expanding means 30 may be formed so that the pressure reduction value of the refrigerant supplied to the evaporating part disposed at the upstream of the flow direction of the air blown by the blower 60 is larger than that of the refrigerant supplied to the evaporating part disposed at the downstream of the flow direction. Figs. 7A, 7B and 7C are examples of the expanding means which satisfy the conditions described above. In Fig. 7D, the conditions may be satisfied by controlling the opening degree of the first and second expanding parts 35a and 35b. All constructions which can satisfy the above-mentioned conditions are included in the scope of the present invention, although they are not shown in Fig. 7.

The expanding means 30 may be formed so that the pressure reduction value of the refrigerant supplied to the evaporating part in which a relatively small flow rate is supplied is larger than that of the refrigerant supplied to the evaporating part in which a relatively larger flow rate is supplied. According to the above description of the evaporator and the evaporating part, as the amount of refrigerant supplied to the more upstream side of the flow direction of the air blown from the blower becomes larger, it is further advantage in the performance thereof. That is, in case that the distribution rate of the refrigerant supplied to the evaporating part disposed at the more upstream side becomes larger, the conditions is satisfied by the construction of the embodiment of Fig. 7. Of course, the constructions which can satisfy the above-mentioned conditions are included in the scope of the present invention, although they are not shown in Fig. 7.

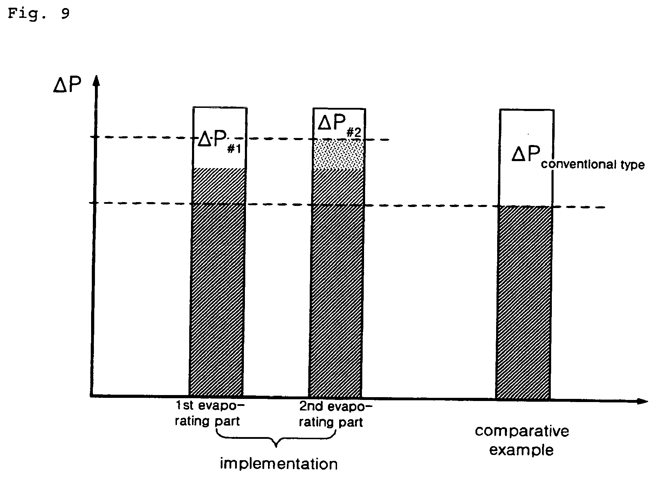

Further detailed description will be described with reference to Figs. 8 and 9. Fig. 8 is a view showing a p-h line in a refrigerating cycle device having a conventional evaporator and an evaporator of the present invention which is divided into two evaporating parts, and Fig. 9 is a view showing a pressure drop rate in the refrigerating cycle device. In Fig. 8, a point A is an inlet port of a compressor, a point B is an outlet port of the compressor, a point C is an outlet port of a condenser, a point D is an inlet port of a conventional evaporator, a point D_{#1} is an inlet port of a region #1 in an evaporator of the present invention, a point D_{#2} is an inlet port of a region #2 in the evaporator of the present invention, and a point E is an outlet port of the evaporator.

In case of an evaporating part (the region #2) which is disposed at the downstream of the flow direction of the air blown by the blower, since a flow rate of the refrigerant is smaller than that of the refrigerant supplied to an evaporating part (region #1) disposed at an upstream side of the air flow blown by the blower, a pressure loss in the evaporating part becomes smaller. Therefore, if an additional reducing means 35b is provided at a refrigerant passage connected to the region #2 so as to reduce pressure of the refrigerant, it is possible to enhance the evaporation of the refrigerant in the evaporating part.

According to the present invention, it is also possible to enhance the evaporation of the refrigerant by reducing the pressure of the refrigerant (the pressure of the inlet port of the evaporator) supplied through the expanding means to the evaporator corresponding to decrease of the pressure loss in the evaporator. In comparing pressure loss rates of the refrigerant in the evaporator (evaporating part), as shown in Fig. 9, ΔP conventional type (pressure drop rate in the conventional evaporator) > ΔP_{#1} > ΔP_{#2}, it can be understood that, as the refrigerant pressure at an inlet port of each evaporating part becomes lower than that at the conventional type, the refrigerant evaporation occurs more smoothly.

Further, in case of the evaporator of the present invention, since each evaporating region is disposed in parallel, a total pressure drop rate occurred in the evaporator is not a sum of the pressure drop rates occurred in each region, but depends on the largest pressure loss value occurred in the regions. Thus, it is possible to further increase the improvement effect of the pressure loss.

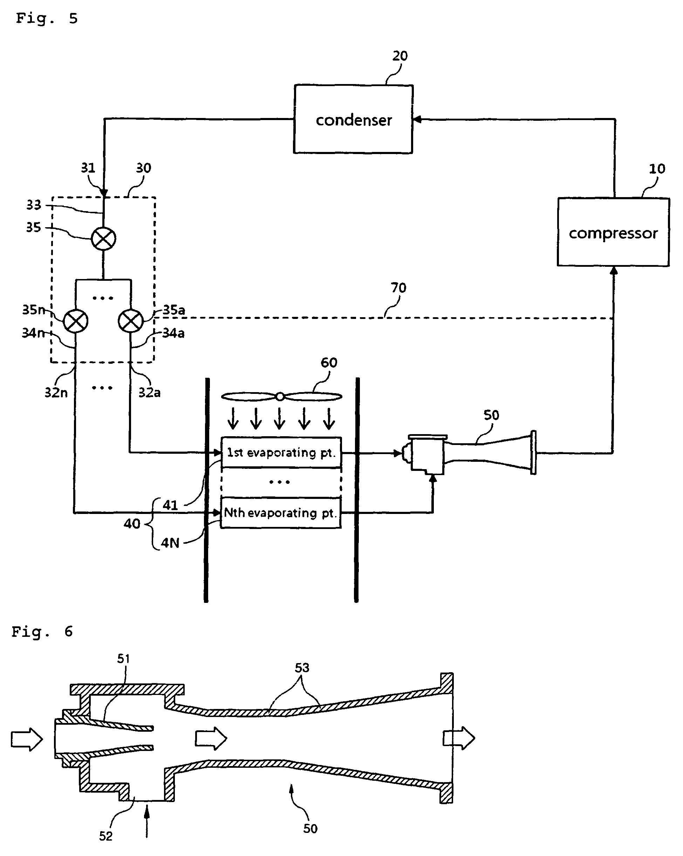

Fig. 5 shows an embodiment in which a multi-evaporation system of the present invention has an ejector. In this case, an ejector 50 is further provided between the evaporator 40 and the compressor 10 so as to mix the refrigerant discharged from the evaporator 40 and thus improve the conditions such as pressure and temperature.

Detailedly speaking, each refrigerant passing through the evaporating parts 41 to 4N has a different pressure and temperature condition from each other. If the branched passages are combined into one, the mixing is naturally occurred and thus the conditions such as the pressure and temperature will be equalized. However, the refrigerant may be not completely mixed before being supplied to the compressor 10, and thus the efficiency in the compressor 10 may be partially reduced. In the embodiment of Fig. 5, in order to avoid the problem, the ejector 50 is provided between the evaporator 40 and the compressor 10.

By using a flow speed of the refrigerant discharged from a part of the first to Nth evaporating parts 41 to 4N, the ejector 50 sucks the refrigerant discharged from a part or whole of the rest of the evaporating parts, raises the pressure of the refrigerant and then supplies the refrigerant to the compressor 10. Fig. 6 shows an embodiment of the ejector according to the present invention. As shown in Fig. 6, the ejector 50 includes a nozzle part 51 which decompresses and expands the refrigerant discharged from a part of the first to Nth evaporating parts 41 to 4N and also increases a flow speed of the refrigerant, a suction part 52 which sucks the refrigerant discharged from part or whole of the rest of the evaporating parts using an increased flow speed of the refrigerant injected from the nozzle part 51, a diffuser part 53 which mixes the refrigerant injected from the nozzle part 51 and the refrigerant sucked through the suction part 52 and then raise pressure of the mixed refrigerant. In other words, the refrigerant discharged from a part of the evaporating parts 41 to 4N is flowed into the nozzle part 51 of the ejector 50, and the refrigerant discharged from the rest is flowed into the suction part 52 of the ejector, and then the refrigerants is mixed in the diffuser part 53 of the ejector 50. At this time, the refrigerants discharged from the evaporating parts 41 to 4N may be adapted to pass through the ejector 50, or a part of the refrigerants may be adapted to be naturally mixed without passing through the ejector 50.

Preferably, the ejector 50 is formed so that the refrigerant has a subsonic speed. Most of the generator ejectors are formed so that the refrigerant passing through the ejector has a supersonic speed. In this case, a noise generated from the ejector is very large. Since the evaporation system of the present invention is installed in a vehicle, it is necessary to restrain the generation of the noise. Therefore, in the present invention, the refrigerant in the ejector 50 has a subsonic speed instead of a supersonic speed. Accordingly, the ejector 50 efficiently mixes the refrigerants without generation of the noise.

The present application contains subject matter related to Korean Patent Application No. 10-2009-0042057, filed in the Korean Intellectual Property Office on May 14, 2009 Korean Patent Application No. 10-2009-0119621, filed in the Korean Intellectual Property Office on December 4, 2009, Korean Patent Application No. 10-2009-0119628, filed in the Korean Intellectual Property Office on December 4, 2009 and Korean Patent Application No. 10-2009-0119633, filed in the Korean Intellectual Property Office on December 4, 2009 the entire contents of which is incorporated herein by references.

### [Industrial Applicability]

According to the present invention, since the refrigerants passing through the evaporating parts 41 to 4N are passed through the ejector 50 so as to be smoothly mixed with each other, it is possible to stabilize the pressure and temperature of the refrigerant flowed into the compressor 10.

## Claims

1. A multi-evaporation system, comprising:
a compressor (10) which sucks and compresses refrigerant;
a condenser (20) which condenses the refrigerant compressed in the compressor (10);
an expanding means (30) which receives the refrigerant condensed in the condenser (20) through an inlet port (31), branches the refrigerant into at least two or more, discharges the refrigerant through at least two or more discharging part (32a to 32n), and throttles the refrigerant before or after the refrigerant is branched; and
an evaporator (40) which comprises at least two or more evaporating parts (41 to 4N) each having an inlet port and an outlet port so as to receive and evaporate the refrigerant discharged from the expanding means (30) and then introduce the evaporated refrigerant into the compressor (10), wherein the inlet ports of the evaporating parts (41 to 4N) are connected to the discharging parts (32a to 32n) and the outlet ports of the evaporating parts (41 to 4N) are connected together,
the discharging parts (32a to 32n) and the evaporating parts (41 to 4N) are connected by refrigerant passages disposed in parallel,
wherein the apparatus is suitable for supplying the refrigerant to the evaporating parts (41 to 4N) at the same time, wherein the refrigerant is branched and discharged from the discharging parts (32a to 32n) of the expanding means (30) to the evaporating parts (41 to 4N), **characterized in that**
the evaporating parts (41 to 4N) are parallely disposed in a flow direction of air passing through the evaporating parts (41 to 4N) so that the air blown by a single blower 60 is passed through in turn the evaporating parts (41 to 4N) so as to be cooled, and
and wherein the system is suitable for supplying a distribution rate of the refrigerant to the evaporating parts (41 to 4N) which becomes higher as the evaporating parts (41 to 4N) are disposed at a more upstream side of the flow direction of the air blown from the blower (60).

2. The multi-evaporation system of claim 1,
wherein the evaporating parts 41 to 4N are formed by dividing the evaporator 40 into at least two or more evaporating regions.

3. The multi-evaporation system of claim 1,
wherein the evaporating parts 41 to 4N are formed by dividing the evaporator 40 into two evaporating regions.

4. The multi-evaporation system of claim 1,
wherein the evaporating parts 41 to 4N are formed separately so as to be closely contacted with each other and arranged in parallel.

5. The multi-evaporation system of claim 1,
wherein the expanding means 30 comprises:
an inlet passage 33 which passes the refrigerant introduced from the inlet port 31; and
at least two or more outlet passages 34a to 34n which are formed by dividing the inlet passage 33 into at least two or more so as to discharge the refrigerant to the discharging part 32a to 32n.

6. The multi-evaporation system of claim 5,
wherein the expanding means 30 comprises an expanding part before branching 35 which is provided at the inlet passage 33 so as to throttle the refrigerant,
and an expanding part 35a to 35n which is provided at the outlet passage 34a to 34n so as to throttle the refrigerant.

7. The multi-evaporation system of claim 6,
wherein the expanding part before branching 35 and the expanding part 35a to 35n are respectively comprised of one selected from an expansion valve, an orifice, a capillary tube, and a reducing means.

8. The multi-evaporation system of claim 6,
wherein the expanding means 30 comprises the expanding part before branching 35, and the expanding parts provided at the outlet passages except the first outlet passage 34a which supplies the refrigerant to the first evaporating part 41 disposed at an uppermost stream side of the flow direction of the air blown by the blower 60.

9. The multi-evaporation system of claim 8,
wherein the expanding part before branching 35 is comprised of an expansion valve, and the expanding parts provided at the outlet passages except the first outlet passage 34a is comprised of one selected from reducing means comprising an orifice and a capillary tube.

10. The multi-evaporation system of claim 5,
wherein the expanding means 30 is formed so that a pressure reduction value of the refrigerant supplied to the evaporating part disposed at the downstream of the flow direction of the air blown by the blower 60 is larger than that of the refrigerant supplied to the evaporating part disposed at the upstream of the air flow direction.

11. The multi-evaporation system of claim 5,
wherein the expanding means 30 is formed so that a pressure reduction value of the refrigerant supplied to the evaporating part having a relatively small flow rate becomes larger.

12. The multi-evaporation system of claim 5,
wherein the expanding means 30 is comprised of expanding parts 35a to 35n which are provided at the outlet passages 34a to 34n so as to throttle the refrigerant, and the expanding parts 35a to 35n are formed so that a pressure reduction level is controlled by adjusting an opening degree thereof.

13. The multi-evaporation system of claim 12,
wherein the expanding means 30 is formed so that a pressure reduction value of the refrigerant supplied to the evaporating part disposed at the downstream of the flow direction of the air blown by the blower 60 is larger than that of the refrigerant supplied to the evaporating part disposed at the upstream of the air flow direction.

14. The multi-evaporation system of claim 1,
further comprising an ejector 50 which is provided between the evaporator 40 and the compressor 10 so as to suck the refrigerant discharged from a part or whole of the remaining evaporating parts using a flow speed of the refrigerant discharged from a part of the first to Nth evaporating parts 41 to 4N, raise pressure of the refrigerant and then supply the refrigerant to the compressor 10.

15. The multi-evaporation system of claim 14,
wherein the ejector 50 comprises:
a nozzle part 51 which decompresses and expands the refrigerant discharged from a part of the first to Nth evaporating parts 41 to 4N, and increases a flow speed of the refrigerant;
a suction part 52 which sucks the refrigerant discharged from part or whole of the remaining evaporating parts using an increased flow speed of the refrigerant injected from the nozzle part 51; and
a diffuser part 53 which mixes the refrigerant injected from the nozzle part 51 and the refrigerant sucked through the suction part 52 and then raise pressure of the mixed refrigerant.

16. The multi-evaporation system of claim 14,
wherein the ejector 50 is formed so that the refrigerant has a subsonic speed.

17. The multi-evaporation system of claim 1,
further comprises a detecting means 70 which is provided at passages for connecting the expanding means 30, the evaporator 40 and the compressor 10 so as to detect temperature and pressure of the refrigerant and control an operation of the expanding means 30.

## Patentansprüche

1. Mehrfachverdampfungssystem, umfassend:
einen Verdichter (10), der Kältemittel ansaugt und verdichtet;
einen Verflüssiger (20), der das in dem Verdichter (10) verdichtete Kältemittel verflüssigt;
ein Entspannungsmittel (30), das das in dem Verflüssiger (20) verflüssigte Kältemittel durch eine Einlassöffnung (31) aufnimmt, das Kältemittel in mindestens zwei oder mehr verzweigt, das Kältemittel durch mindestens zwei oder mehr Ablassteile (32a bis 32n) ablässt und das Kältemittel vor oder nach dem Verzweigen des Kältemittels drosselt; und
einen Verdampfer (40), der mindestens zwei oder mehr Verdampfungsteile (41 bis 4N) umfasst, die jeweils eine Einlassöffnung und eine Auslassöffnung aufweisen, um das von dem Entspannungsmittel (30) abgelassene Kältemittel aufzunehmen und zu verdampfen und dann das verdampfte Kältemittel in den Verdichter (10) einzuleiten, wobei die Einlassöffnungen der Verdampfungsteile (41 bis 4N) mit den Ablassteilen (32a bis 32n) verbunden sind und die Auslassöffnungen der Verdampfungsteile (41 bis 4N) miteinander verbunden sind,
wobei die Ablassteile (32a bis 32n) und die Verdampfungsteile (41 bis 4N) durch parallel angeordnete Kältemittelkanäle verbunden sind,
wobei die Vorrichtung zum gleichzeitigen Versorgen der Verdampfungsteile (41 bis 4N) mit dem Kältemittel geeignet ist, wobei das Kältemittel von den Ablassteilen (32a bis 32n) des Entspannungsmittels (30) verzweigt und zu den Verdampfungsteilen (41 bis 4N) abgelassen wird,
**dadurch gekennzeichnet, dass**
die Verdampfungsteile (41 bis 4N) in einer Strömungsrichtung einer durch die Verdampfungsteile (41 bis 4N) tretenden Luft parallel angeordnet sind, so dass die von einem einzigen Gebläse 60 geblasene Luft wiederum durch die Verdampfungsteile (41 bis 4N) geblasen wird, um gekühlt zu werden, und
wobei das System geeignet ist zum Versorgen der Verdampfungsteile (41 bis 4N) mit einer Verteilungsrate des Kältemittels, die höher wird, wenn die Verdampfungsteile (41 bis 4N) an einer weiter stromaufwärts liegenden Seite der Strömungsrichtung der von dem Gebläse (60) geblasenen Luft angeordnet sind.

2. Mehrfachverdampfungssystem nach Anspruch 1, wobei die Verdampfungsteile 41 bis 4N durch Unterteilen des Verdampfers 40 in mindestens zwei oder mehr Verdampfungsbereiche gebildet sind.

3. Mehrfachverdampfungssystem nach Anspruch 1, wobei die Verdampfungsteile 41 bis 4N durch Unterteilen des Verdampfers 40 in zwei Verdampfungsbereiche gebildet sind.

4. Mehrfachverdampfungssystem nach Anspruch 1, wobei die Verdampfungsteile 41 bis 4N getrennt ausgebildet sind, um eng in Kontakt zueinander und parallel angeordnet zu sein.

5. Mehrfachverdampfungssystem nach Anspruch 1, wobei das Entspannungsmittel 30 umfasst:
einen Einlasskanal 33, der das von der Einlassöffnung 31 eingeleitete Kältemittel führt; und
mindestens zwei oder mehr Auslasskanäle 34a bis 34n, die durch Unterteilen des Einlasskanals 33 in mindestens zwei oder mehr ausgebildet sind, um das Kältemittel zu dem Ablassteil 32a bis 32n abzulassen.

6. Mehrfachverdampfungssystem nach Anspruch 5, wobei
das Entspannungsmittel 30 einen Entspannungsteil vor der Verzweigung 35, der an dem Einlasskanal 33 vorgesehen ist, um das Kältemittel zu drosseln,
und einen Entspannungsteil 35a bis 35n, der an dem Auslasskanal 34a bis 34n vorgesehen ist, um das Kältemittel zu drosseln,
umfasst.

7. Mehrfachverdampfungssystem nach Anspruch 6, wobei der Entspannungsteil vor der Verzweigung 35 und der Entspannungsteil 35a bis 35n jeweils aus einem gewählt aus: einem Expansionsventil, einer Düse, einem Kapillarrohr und einem Reduzierungsmittel bestehen.

8. Mehrfachverdampfungssystem nach Anspruch 6, wobei das Entspannungsmittel 30 den Entspannungsteil vor der Verzweigung 35 und die Entspannungsteile, die an den Auslasskanälen mit Ausnahme des ersten Auslasskanals 34a vorgesehen sind, der das Kältemittel zu dem ersten Verdampfungsteil 41 liefert, der an einer am weitesten stromaufwärts gelegenen Seite der Strömungsrichtung der von dem Gebläse 60 geblasenen Luft angeordnet ist, umfasst.

9. Mehrfachverdampfungssystem nach Anspruch 8, wobei der Entspannungsteil vor der Verzweigung 35 aus einem Expansionsventil besteht und der Entspannungsteil, der an den Auslasskanälen mit Ausnahme des ersten Auslasskanals 34a vorgesehen ist, aus einem gewählt aus Reduzierungsmitteln, die eine Düse und ein Kapillarrohr umfassen, besteht.

10. Mehrfachverdampfungssystem nach Anspruch 5, wobei das Entlastungsmittel 30 so ausgebildet ist, dass ein Druckreduzierungswert des Kältemittels, das dem Verdampfungsteil zugeführt wird, der in der Strömungsrichtung der von dem Gebläse 60 geblasenen Luft stromabwärts angeordnet ist, größer als der des Kältemittels ist, das dem Verdampfungsteil zugeführt wird, der in der Luftströmungsrichtung stromaufwärts angeordnet ist.

11. Mehrfachverdampfungssystem nach Anspruch 5, wobei das Entspannungsmittel 30 so ausgebildet ist, dass ein Druckreduzierungswert des Kältemittels, das dem Verdampfungsteil bei einem relativ kleinen Durchsatz zugeführt wird, größer wird.

12. Mehrfachverdampfungssystem nach Anspruch 5, wobei das Entspannungsmittel 30 aus Entspannungsteilen 35a bis 35n besteht, die an den Auslasskanälen 34a bis 34n vorgesehen sind, um das Kältemittel zu drosseln, und die Entspannungsteile 35a bis 35n so ausgebildet sind, dass ein Druckreduzierungswert durch Einstellen eines Öffnungsgrads derselben gesteuert wird.

13. Mehrfachverdampfungssystem nach Anspruch 12, wobei das Entlastungsmittel 30 so ausgebildet ist, dass ein Druckreduzierungswert des Kältemittels, das dem Verdampfungsteil zugeführt wird, der in der Strömungsrichtung der von dem Gebläse 60 geblasenen Luft stromabwärts angeordnet ist, größer als der des Kältemittels ist, das dem Verdampfungsteil zugeführt wird, der in der Luftströmungsrichtung stromaufwärts angeordnet ist.

14. Mehrfachverdampfungssystem nach Anspruch 1, welches weiterhin einen Ejektor 50 umfasst, der zwischen dem Verdampfer 40 und dem Verdichter 10 vorgesehen ist, um das Kältemittel, das von einem Teil der oder den gesamten verbleibenden Verdampfungsteilen abgelassen wird, mithilfe einer Strömungsgeschwindigkeit des von einem Teil der ersten bis N-ten Verdampfungsteile 41 bis 4N abgelassenen Kältemittels anzusaugen, den Druck des Kältemittels anzuheben und dann das Kältemittel dem Verdichter zuzuführen.

15. Mehrfachverdampfungssystem nach Anspruch 14,
wobei der Ejektor 50 umfasst:
einen Düsenteil 51, der das von einem Teil der ersten bis N-ten Verdampfungsteile 41 bis 4N abgelassenen Kältemittels dekomprimiert und entspannt und eine Strömungsgeschwindigkeit des Kältemittels anhebt;
einen Ansaugteil 52, der das von einen Teil der oder allen verbleibenden Verdampfungsteilen abgelassene Kältemittel mithilfe einer erhöhten Strömungsgeschwindigkeit des von dem Düsenteil 51 eingespritzten Kältemittels ansaugt; und
einen Diffusorteil 53, der das von dem Düsenteil 51 eingespritzte Kältemittel und das durch den Ansaugteil 52 angesaugte Kältemittel mischt und dann den Druck des gemischten Kältemittels anhebt.

16. Mehrfachverdampfungssystem nach Anspruch 14, wobei der Ejektor 50 so ausgebildet ist, dass das Kältemittel eine Unterschallgeschwindigkeit aufweist.

17. Mehrfachverdampfungssystem nach Anspruch 1, welches weiterhin ein Detektionsmittel 70 umfasst, das an Kanälen zum Verbinden des Entspannungsmittels 30, des Verdampfers 40 und des Verdichters 10 vorgesehen ist, um Temperatur und Druck des Kältemittels zu detektieren und einen Betrieb des Entspannungsmittels 30 zu steuern.

## Revendications

1. Système à évaporations multiples, comprenant :
un compresseur (10) qui aspire et comprime un fluide frigorigène ;
un condenseur (20) qui condense le fluide frigorigène comprimé dans le compresseur (10) ;
un moyen de détente (30) qui reçoit le fluide frigorigène condensé dans le condenseur (20) par un orifice d'entrée (31), divise le fluide frigorigène en au moins deux ramifications ou plus, décharge le fluide frigorigène par au moins deux parties de décharge ou plus (32a à 32n), et étrangle le fluide frigorigène avant ou après la division du fluide frigorigène ; et
un évaporateur (40) qui comprend au moins deux parties d'évaporation ou plus (41 à 4N) présentant chacune un orifice d'entrée et un orifice de sortie de manière à recevoir et évaporer le fluide frigorigène déchargé du moyen de détente (30) et ensuite introduire le fluide frigorigène évaporé dans le compresseur (10), les orifices d'entrée des parties d'évaporation (41 à 4N) étant reliés aux parties de décharge (32a à 32n) et les orifices de sortie des parties d'évaporation (41 à 4N) étant reliés ensemble,
les parties de décharge (32a à 32n) et les parties d'évaporation (41 à 4N) étant reliées par des conduits de fluide frigorigène disposés en parallèle,
dans lequel l'appareil est adapté pour acheminer le fluide frigorigène dans les parties d'évaporation (41 à 4N) en même temps, le fluide frigorigène étant divisé et déchargé des parties de décharge (32a à 32n) du moyen de détente (30) aux parties d'évaporation (41 à 4N), **caractérisé en ce que**
les parties d'évaporation (41 à 4N) sont disposées parallèlement dans une direction d'écoulement d'air passant à travers les parties d'évaporation (41 à 4N) de sorte que l'air soufflé par un seul ventilateur (60) est transporté à son tour à travers les parties d'évaporation (41 à 4N) de manière à être refroidi, et
et dans lequel le système est adapté pour acheminer le fluide frigorigène dans les parties d'évaporation (41 à 4N) à une vitesse de distribution qui augmente lorsque les parties d'évaporation (41 à 4N) sont disposées d'un côté plus en amont de la direction d'écoulement de l'air soufflé par le ventilateur (60).

2. Système à évaporations multiples selon la revendication 1,
dans lequel les parties d'évaporation (41 à 4N) sont formées en divisant l'évaporateur (40) en au moins deux zones d'évaporation ou plus.

3. Système à évaporations multiples selon la revendication 1,
dans lequel les parties d'évaporation (41 à 4N) sont formées en divisant l'évaporateur (40) en deux zones d'évaporation.

4. Système à évaporations multiples selon la revendication 1,
dans lequel les parties d'évaporation (41 à 4N) sont formées séparément de manière à être mises en contact étroit entre elles et agencées en parallèle.

5. Système à évaporations multiples selon la revendication 1,
dans lequel le moyen de détente (30) comprend :
un conduit d'entrée (33) qui transporte le fluide frigorigène introduit par l'orifice d'entrée (31) ; et
au moins deux conduits de sortie ou plus (34a à 34n) qui sont formés en divisant le conduit d'entrée (33) en au moins deux parties ou plus de manière à décharger le fluide frigorigène dans la partie de décharge (32a à 32n).

6. Système à évaporations multiples selon la revendication 5,
dans lequel le moyen de détente (30) comprend une partie de détente avant la ramification (35) qui se trouve au niveau du conduit d'entrée (33) de manière à étrangler le fluide frigorigène,
et une partie de détente (35a à 35n) qui se trouve au niveau du conduit de sortie (34a à 34n) de manière à étrangler le fluide frigorigène.

7. Système à évaporations multiples selon la revendication 6,
dans lequel la partie de détente avant la ramification (35) et la partie de détente (35a à 35n) se composent respectivement d'un élément choisi parmi une vanne de détente, un orifice, un tube capillaire, et un moyen de diminution.

8. Système à évaporations multiples selon la revendication 6,
dans lequel le moyen de détente (30) comprend la partie de détente avant la ramification (35) et les parties de détente se trouvant au niveau des conduits de sortie, sauf le premier conduit de sortie (34a) qui achemine le fluide frigorigène dans la première partie d'évaporation (41) disposée du côté d'écoulement le plus haut de la direction d'écoulement de l'air soufflé par le ventilateur (60).

9. Système à évaporations multiples selon la revendication 8,
dans lequel la partie de détente avant la ramification (35) se compose d'une vanne de détente, et les parties de détente se trouvant au niveau des conduits de sortie, sauf le premier conduit de sortie (34a), se composent d'un élément choisi parmi des moyens de diminution comprenant un orifice et un tube capillaire.

10. Système à évaporations multiples selon la revendication 5,
dans lequel le moyen de détente (30) est formé de telle manière qu'une valeur de diminution de la pression du fluide frigorigène acheminé dans la partie d'évaporation disposée en aval de la direction d'écoulement de l'air soufflé par le ventilateur (60) est supérieure à celle du fluide frigorigène acheminé dans la partie d'évaporation disposée en amont de la direction d'écoulement d'air.

11. Système à évaporations multiples selon la revendication 5,
dans lequel le moyen de détente (30) est formé de telle manière qu'une valeur de diminution de la pression du fluide frigorigène acheminé dans la partie d'évaporation présentant un débit relativement faible devient plus importante.

12. Système à évaporations multiples selon la revendication 5,
dans lequel le moyen de détente (30) se compose de parties de détente (35a à 35n) qui se trouvent au niveau des conduits de sortie (34a à 34n) de manière à étrangler le fluide frigorigène, et les parties de détente (35a à 35n) sont formées de telle manière qu'un niveau de diminution de la pression est contrôlé en ajustant un degré d'ouverture de celles-ci.

13. Système à évaporations multiples selon la revendication 12,
dans lequel le moyen de détente (30) est formé de telle manière qu'une valeur de diminution de la pression du fluide frigorigène acheminé dans la partie d'évaporation disposée en aval de la direction d'écoulement de l'air soufflé par le ventilateur (60) est supérieure à celle du fluide frigorigène acheminé dans la partie d'évaporation disposée en amont de la direction d'écoulement d'air.

14. Système à évaporations multiples selon la revendication 1,
comprenant en outre un éjecteur (50) qui se trouve entre l'évaporateur (40) et le compresseur (10) de manière à aspirer le fluide frigorigène déchargé d'une partie ou de la totalité des parties d'évaporation restantes en utilisant une vitesse d'écoulement du fluide frigorigène déchargé d'une partie de la première à la N-ième partie d'évaporation (41 à 4N), augmenter la pression du fluide frigorigène et ensuite acheminer le fluide frigorigène dans le compresseur.

15. Système à évaporations multiples selon la revendication 14,
dans lequel l'éjecteur (50) comprend :
une partie buse (51) qui décomprime et détend le fluide frigorigène déchargé d'une partie de la première à la N-ième partie d'évaporation (41 à 4N) et augmente une vitesse d'écoulement du fluide frigorigène ;
une partie aspiration (52) qui aspire le fluide frigorigène déchargé d'une partie ou de la totalité des parties d'évaporation restantes en utilisant une vitesse d'écoulement accrue du fluide frigorigène injecté par la partie de buse (51) ; et
une partie diffuseur (53) qui mélange le fluide frigorigène injecté par la partie buse (51) et le fluide frigorigène aspiré par la partie aspiration (52) et augmente ensuite la pression du fluide frigorigène mélangé.

16. Système à évaporations multiples selon la revendication 14,
dans lequel l'éjecteur (50) est formé de telle manière que le fluide frigorigène a une vitesse subsonique.

17. Système à évaporations multiples selon la revendication 1,
comprenant en outre un moyen de détection (70) qui se trouve au niveau de conduits pour relier le moyen de détente (30), l'évaporateur (40) et le compresseur (10), de manière à détecter la température et la pression du fluide frigorigène et à contrôler un fonctionnement du moyen de détente (30).
